# EUROPEAN PATENT APPLICATION

(11) **EP 3 081 677 A2**
(43) Date of publication of application: **19.10.2016**
(21) Application number: 14870597.3
(22) Date of filing: 11.12.2014
(51) Int. Cl.: D01F 8/06, D01F 6/06, D04H 1/42, D04H 3/16, D04H 3/00, C08F 2/46, C08F 8/50, C08F 10/06, C08L 23/26, C08L 23/12, C08L 23/10

(54) **METHOD FOR PRODUCING CONTROLLED RHEOLOGY POLYPROPYLENE, POLYPROPYLENE, USE THEREOF AND MANUFACTURED ARTICLES**

(30) Priority: 13.12.2013 US 201361915813 P
(71) Applicant: Braskem S.A., 42810-000 Camaçari - BA (BR)
(72) Inventor: QUENTAL, Antônio Carlos, 05477-000 São Paulo (BR); FARAH, Marcelo, 05477-000 São Paulo (BR); SAKAHARA, Rogério Massanori, 05477-000 São Paulo (BR)
(74) Representative: Eisenführ Speiser
(86) International application number: PCT/BR2014/050040
(87) International publication number: WO 2015/085390

(57) **Abstract**

The present invention pertains to a method of preparing a controlled rheology polypropylene characterized by comprising a stage of mixing a propylene polymer with at least one low-reactivity organic peroxide.

The rheology polypropylene of the present invention can be applied for producing fibers in melt blown processes, hot melt adhesives, spunbond and injection-molded articles.

## Description

### FIELD OF THE INVENTION

The present invention pertains to a method of preparing controlled rheology PP (CRPP) resins particularly indicated for processes of manufacturing fibers, nonwoven fabric such as spunbond and meltblown, injection-molded articles, adhesives hot-melt, among others.

### DESCRIPTION OF THE STATE OF THE ART

Polypropylene is one of the most used polymers throughout the world in various applications. This is due to the sum of combination of mechanical properties, low cost and ease of processing. Among the existing types of PP, of particular note is the so-called Controlled-Rheology Polypropylene (CRPP), that is, controlled rheology polypropylene, usually applied in processes of Melt Blown, Injection, Hot Melt, among others. The CRPP is produced on an industrial scale using peroxides as generators of free radicals and initiators in a process of reactive extrusion.

The CRPPs present technological challenges in their production, as suitable catalyst systems are required, as well as a controlled and high flow of peroxides during the extrusion process. This control should be rigid so as to maintain the stability and uniformity of the process, and consequently generate a final product with better quality and performance. Low viscosity products present extra granulation challenges due to the low pressure and tendency to form polymer fibers. This is a severe limitation in industrial processes, by forming ultra-low viscosity polymers.

Although the peroxides used in the CRPP currently impact the minimal rheological characteristics in the melt blown process applications, processing is made harder due to the high amount of peroxide and to said low viscosity of the resulting product.

Since these products, when undergoing the reaction of the peroxide, present a certain content of volatiles from the decomposition thereof, when being stored in large scale they tend to present an accumulation of these gases which are normally explosive.

Patents US5594074, US4451589 and US4897452 describe processes of producing CRPP by using peroxides or low-efficiency substances. Consequently, there is a need to add large amounts of these substances or use of initiators in the process for suitable generation of free radicals. Differently to the present invention, these documents describe processes of producing CRPP with the aim of preserving part of the reaction, but the processes are altered in such a way that make industrial-scale production hard or even unfeasible. Additionally, the present invention differs from these patents because it uses more stable peroxide that enables it to be mixed with the PP without a prior reaction during CRPP production and generates a product with suitable properties for producing nonwoven fabric, hot melt and injection molding.

Patent US5594074 describes a method of producing CRPP by using peroxide which should be processed with alterations in the extrusion temperature and in the residence time during the reactive extrusion for the CRPP product to have good characteristics. However, it is known that in a PP production industrial plant, the scale of the equipment does not always enable suitable temperature control and the reduction in temperature is not viable. The control of the residence time is also hindered, since the extruders are not "flexible" and tend to operate at the highest possible load, so the increase in the residence time is only possible by altering the productivity of the entire reactor. Accordingly, the cost of the process described is high, which restricts its use only to certain lower scale sectors and versatility. Contrary to the process described, in the present invention the CRPP is obtained without the need for altering productivity and process control. Additionally, it is possible to obtain resins with suitable rheology characteristics using a lesser amount of active oxygen.

Patent US4451589 describes a method of producing CRPP with alterations in the cooling and granulation process, meaning the peroxide has insufficient time or energy to initiate the reaction. However, the speed of the process might compromise homogenization of the peroxide when in higher amounts. The process of the present invention does not require these controls, and can be applied to all processing types and characteristics with greater versatility of conditions applied.

Patent US4897452 describes the production of CRPP using two types of peroxides that should be included in different places during the reactive extrusion. In this process, the injection of peroxides at different points is disadvantageous, since the last point of injection may have been less homogenized that the former, despite still being active. Another disadvantage is the need for specific injection systems which in industrial extruders are not usually available, thus requiring engineering studies for adjustment. The process of the present invention does not require alterations of the already existing industrial installations.

The present invention presents a method of producing CRPP using less reactive peroxide during the mixing process, whereby obtaining a safer product with improved performance.

The peroxides used in the present invention are less reactive and atypical for polypropylene applications in processes of producing nonwovens, such as spunbond and melt blown, injection-molding, PP for hot-melt among others.

In the present invention, the reaction of these peroxides predominantly begins in the processing of the resin for final application, that is, in the formation phase of the nonwoven, in the composition of the hot-melt or in the injection-molding, for example. Therefore, the specific rheological behavior is impacted only at the necessary time.

Additionally, the CRPP of the present invention presents better processability, including during the granulation process. Further, there is a lesser release of volatiles (VOC) and greater safety in transport and storage of the CRPP obtained.

### DESCRIPTION OF THE DRAWINGS

Figure 1 - Exponential decay (half-life t ½) (s) versus temperature (°C), for different peroxides. (101 = Trigonox 101, 311 = Trigonox 311, 301= trigonox 301 and A-80 trigonox A-80)
Figure 2 - Complex Viscosity versus Frequency for samples of homopolymer obtained in the 1^{st} Extrusion and 2^{nd} Extrusion.
Figure 3 - Complex Viscosity versus assay time for samples containing peroxide Trigonox 101 and Trigonox 311 pure and diluted in oil.
Figure 4 - Complex Viscosity versus Frequency for samples extruded under different conditions and different peroxides.
Figure 5 - Molecular weight distribution versus active content of oxygen for different samples of CRPP.
Figure 6 - Fluidity index versus active content of oxygen for the peroxides Trigonox 101 and Trigonox 311 after the Second Extrusion.
Figure 7 - Complex Viscosity versus active content of oxygen for the peroxides Trigonox 101 and Trigonox 301 after the Second Extrusion.
Figure 8 - Complex Viscosity versus active content of oxygen for the peroxides Trigonox 101 and Trigonox 301 after the Second Extrusion.

### OBJECTIVES OF THE PRESENT INVENTION

A first objective of the invention is to provide a method of preparing a controlled rheology polypropylene comprising a stage of mixing a propylene polymer with at least one low-reactivity organic peroxide.

A further objective of the present invention is to provide a controlled rheology polypropylene for use in meltblown and spunbond processes, for producing fibers and TNT, hot melt adhesives, injection-molded articles, among others.

### DETAILED DESCRIPTION OF THE INVENTION

The CRPP of the present invention comprises at least one propylene polymer and at least on additive for reducing viscosity (also known as visbroken). The viscosity reduction agent can be selected from among the group which comprises low reactivity organic peroxides.

The CRPP resins are also known as PP visbroken, meaning a PP that reacts with peroxide radicals resulting in a polymer with reduced molar mass and very low viscosity.

The expression "propylene polymer" (also called polypropylene, PP or pure PP) is understood to be a homopolymer PP, random copolymer, heterophasic copolymer, polypropylene blends, polypropylene blends with polyethylenes, polypropylene blends with EPDM, polypropylenes with elastomers, polymer of random PP with 0 to 6% of one or more comonomers, the comonomers being selected from ethylene or alphaolefins containing 4 to 20 atoms of carbon, or mixtures thereof. The propylene polymer used presents IF (Fluidity index) from 0.3 to 200g/10min and/or viscosity Eta 0 between 100.000 Pa.s and 500 Pa.s at 200°C;

The expression "low-reactivity organic peroxide" is understood to be peroxides that present exponential decay temperature of one hour (half-life of 1h) longer than 140°C, preferably longer than 145°, more preferably longer than 148°C; and/or organic peroxides that present temperature exponential decay of ten hours (half-life of 10h) longer than 128°C, preferably longer than 130°C, more preferably longer than 135°C.

In a preferred embodiment, the low-reactivity organic peroxide is selected from the group comprising di(t-butyl) peroxide, 2,5-dimethyl-2,5-di(t-butylperoxy)-3-hexine; 3,3,5,7,7-Pentamethyl-1,2,4-trioxepane; hydroperoxide of tert-butyl and mixtures thereof.

The peroxides selected can be in the form of liquid, powder, diluted in mineral oil, masterbatch, emulsion, solution, peroxide blends, mixtures with silicas or other loads.

The low-reactivity organic peroxide is added to the propylene polymer according to its concentration of active oxygen, and may vary from 50 to 5000 ppm, preferably from 80 to 3000 ppm, more preferably from 100 to 1000 ppm of active oxygen based on the mass of the final composition.

### Process of producing the CRPP resin

The process of producing the CRPP resin of the present invention comprises a stage of mixing at least one viscosity reduction additive to a propylene polymer (post-reactor). That is, the viscosity reduction additive (low-reactivity organic peroxide) is added to the polypropylene in melted state during the extrusion phase (also called 1^{st} Extrusion). After the mixture/extrusion, the CRPP resin obtained may optionally be granulated/pelletized. The product resulting from this process will be a controlled rheology polypropylene (CRPP) resin containing low-reactivity organic peroxide still active and in high amount incorporated to the polypropylene. This resin will comprise over 70% of active oxygen in its composition. This process generally occurs in PP synthesis industrial plants.

The extrusion occurs in a single or twin-screw extruder.

The temperature of the mixing (1^{st} Extrusion) and granulation stage should be adjusted so that the degradation kinetics of the peroxide is slow enough to maintain at least 70% of the oxygen active in the product obtained. Preferably, the mixture and granulation should occur at a temperature lower than 250°C, more preferably, between 210 and 240°C. The mixture time is preferably under 50s.

The addition of the organic peroxides may occur simultaneously or separately in the main feeder of the extruder or at different points thereof.

Due to the low temperatures attained during the mixing stage and the low reactivity of the peroxides used, there is little or no reaction during extrusion. The reaction of the peroxides to reduce the viscosity begins significantly only in a subsequent heating stage at the time of processing the CRPP resin (2^{nd} Extrusion) to obtain the final product (application), that is, fibers, molded articles, adhesives, among others. For this reaction to occur, the CRPP resin should be processed at a temperature which varies from 260 to 310°C, preferably temperature which varies from 265 to 310°C. Therefore, the desirable rheology (viscosity) for the application (meltblown, spunbond, injection, production of TNT, fibers, for example) is only attained when necessary.

After the 2^{nd} Extrusion, the CRPP should present viscosity at least four times lower than that of the pure propylene polymer, or viscosity Eta 0 between 5 and 100 Pa.s at 200°C (corresponding to IF between 400g/10min and 3000g/10min).

Further, after the 2^{nd} Extrusion, when all the active oxygen incorporated into the 1^{st} extrusion has reacted, the CRPP presents lower MMD than conventional technologies.

The process of the present invention considerably diminishes the competition between the dispersion and the degradation reaction. This effect is very common occurs in more active peroxides usually employed in PP such as Trigonox™ 101 and Trigonox™ 301.

The process of the present invention produces a polypropylene containing a high content of active peroxide. This peroxide incorporated into the PP presents a high degree of dispersion, enabling greater efficiency of the peroxide in reacting with the same polymer chains. Therefore, products can be generated with lower viscosity with the same content of active oxygen or products with a lesser load of peroxides for a same viscosity.

The amount of active oxygen used, after the complete reaction of the peroxides (that is, after the 2^{nd} Extrusion), is at least 25% less than the amount employed in usual technologies in the production of CRPP to attain a certain viscosity. Further, it may be necessary to add fewer additional free radical generators, meaning simplification of the formulation. Additionally, for a same amount of active oxygen, after the complete reaction of the peroxide (2^{nd} Extrusion), the resulting product will have at least 50% or less the viscosity of usual technologies.

The high performance of the process of the present invention is also advantageous from the point of view of safety and the environment. Using low reactivity organic peroxides, the emission of VOC (Volatile Organic Compounds) is lower compared to conventional processes. Further, the CRPP resins obtained in the present invention can be transported and stored in a safe manner. Additionally, there is an improvement in the organoleptic properties.

Another advantage of the CRPP of the present invention is the ease of granulation without the need for adjustments in the extrusion process. It is known that the granulation process is hindered when carried out on ultra-low viscosity resins. The CRPP resin of the present invention overcomes this problem, as it presents suitable viscosity for granulation (important for the submersed cutting of the process). The low viscosity will be attained only in the processing for the final application (2^{nd} Extrusion). This characteristic is particularly advantageous in industrial plants, where the resin is produced, granulated and subsequently transported for application at the client.

### The application of the final product

The CRPP resins of the present invention are particularly indicated for processes that use low viscosity resins and narrow molar mass distribution, such as, for example, melt blown and spun-bond processes, for manufacturing fibers and TNT, hot melt adhesives and injection-molded articles.

In the **melt blown** process, the CRPP of the present invention is extruded through orifices when a high-speed hot air flow is injected to produce very fine fibers (from 1 to 10 um in diameter). These fibers are then placed on a conveyor belt on which the final product (TNT) is formed. The melt blown process is carried out at temperatures varying between 220°C to 290°C. In this temperature range, the low-reactivity organic peroxide incorporated into the CRPP resin begins to react, promoting a reduction in the viscosity until attaining a suitable viscosity for the melt blown process, generating final products with superior quality. The low viscosity and narrow molar mass distribution of the CRPP of the present invention will result in high processability and process stability. The narrower mass distribution collaborates with the stability of the process by resulting in lower variation of viscosity with the deformation and consequently greater flow stability. Additionally, lower viscosity will enable the formation of finer fibers resulting in greater uniformization in the formation of the fabric and improvement in the liquid and gas barrier property.

The CRPP of the present invention is also suitable for manufacturing **adhesives (hot melt),** where there is a significant need for low viscosities and very narrow molar mass distribution. These characteristics are necessary, since generally the application of the adhesive is carried out by means of a glue-type application process, which is no more than a mobile mini-injector applying a small line of adhesive on a surface. The low viscosity is necessary due to the pressure generated in the system, and the lower the viscosity the greater the application speed possibility. In contrast, PP resins with narrow molar distribution contribute with lower pseudoplasticity indices than the usual PP, presenting more stable viscosities in the glue application processes. Therefore, the low viscosity and narrow molar weight distribution of the CRPP resin of the present invention contributes to the flow stability and potentializes the stability of high application speeds.

In injection-molding processes, the use of the CRPP of the present invention results in processability gain, as it presents low viscosity, implying that for the same pressure there is a greater filling flow. Another gain will be the lower generation of volatile products or lower VOC ("Volatile Organic Compounds"), in addition to improved organoleptic properties.

The CRPPs of the present invention can also be applied to reactive extrusions for matching, grafting or matching with other resins, since the greater dispersion of the organic peroxides in the PP and their slower reaction kinetics, enable greater process control.

### EXAMPLES

### Determining the peroxide to be used

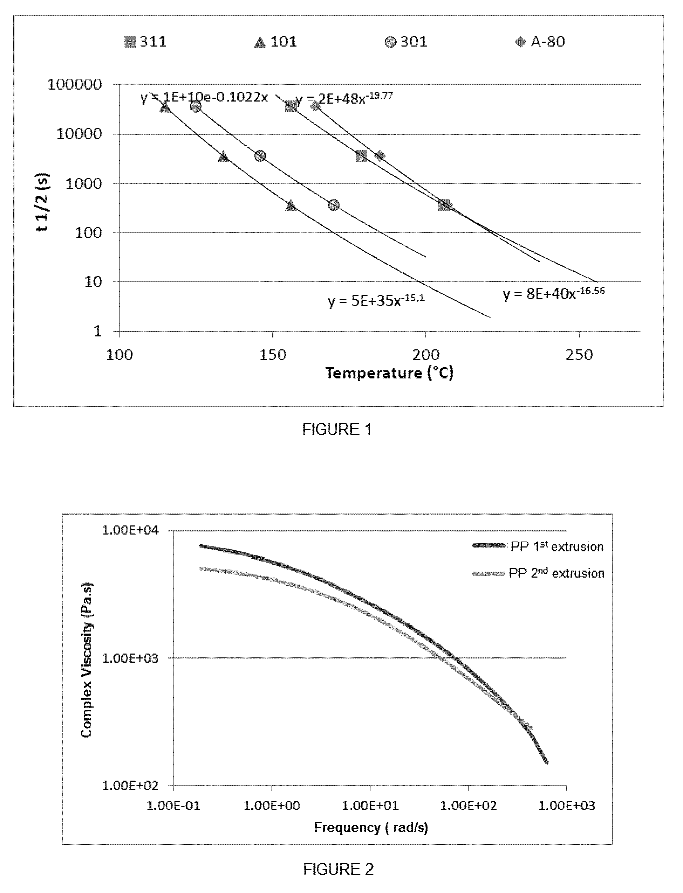

The graphic of Figure 1 shows the comparison of half-life decay between the low reactivity organic peroxides of the present invention and peroxides usually employed. The following were tested: 3,3,5,7,7-pentamethyl-1,2,4-trioxepane (Trigonox™ 311 manufactured by AkzoNobel), 2,5-Dimethyl-2,5-di(tert-butylperoxy)hexane (Trigonox™ 101 manufactured by AkzoNobel), 3,6,9 -Triethyl-3,6,9- trimethyl- 1,4,6 triperoxonane (Trigonox™ 301 manufactured by AkzoNobel) and tert-butyl hydroperoxide (Trigonox™ A-80 manufactured by AkzoNobel).

Luperox 130 (2,5-dimethyl-2,5-di(t-butylperoxy)-3-hexine) and Luperox DI (di(t-butyl) peroxide) can also be used in the process of the present invention.

It is noted that the reaction kinetics between the peroxides usually employed, 101 and 301, is significantly different from the peroxides proposed by the present invention.

To determine the amount of peroxide to be used, the concentration of active oxygen of the peroxide should be considered. The term active oxygen indicates the amount of oxygen which will generate a radical to react with a polymer. Besides the different types of peroxides, there are differences in the purities, molecular weights and, in some cases mixtures of peroxides with carriers such as mineral loads, oils, etc.

Table 1 presents a comparison between desired amounts of active oxygen and relative amounts to be used for different peroxides. The lower the amount of active oxygen the greater the amount of peroxide to be used for a same effect of degradation.

**Table 1 - Contents of peroxides for the same content of active oxygen***

| O-O(ppm) | **101** | **311** | **301** | **A-80** | **130** |
|---|---|---|---|---|---|
| **120** | 591.0 | 686.8 | 805.5 | 422.3 | 631.8 |
| **140** | 689.5 | 801.3 | 939.7 | 492.7 | 737.1 |
| **160** | 788.0 | 915.8 | 1074.0 | 563.1 | 842.4 |
| **200** | 985.1 | 1144.7 | 1342.5 | 703.9 | 1053.0 |

| | | | | | |
|---|---|---|---|---|---|
| *Addition value considering the purities declared by the suppliers | | | | | |

A comparison of reactivity and active oxygen is presented in Table 2.

**Table 2 - Activity kinetics and active oxygen of different peroxides**

| | **Active oxygen*** | **Ea kcal/gmole** | **A s⁻¹** | **t ½ 1h °C** | **t ½ 10h °C** |
|---|---|---|---|---|---|
| **Trigonox 101** | **11.02** | 37.182 | 8.73E+15 | 120.3 | 140.3 |
| **Trigonox 301** | **18.16** | 36.0552 | 1.02E+15 | 126.4 | 147.7 |
| **Luperox 130** | **11.17** | 38.127 | 7.87E+15 | 131.1 | 151.8 |
| **Trigonox 311** | **9.18** | 46.78 | 3.08E+19 | 147.0 | 166.0 |
| **Trigonox A-80** | **17.76** | 44.64 | 3.18E+17 | 185.0 | 207.0 |

| | | | | | |
|---|---|---|---|---|---|
| * Catalog data | | | | | |

### Preparation of samples and process conditions

The sample tested were prepared using a polypropylene homopolymer with IF (ASTM D 1238-230°C / 2.16kg) of about 3.5g / 10 min (called "resin base").

For comparative purposes, samples of the present invention comprising Trigonox™ 311 (Samples 1, 2, 3 and 4) and samples comprising a conventional peroxide - Trigonox™ 101 (Samples 1', 2', 3' and 4') were tested.

Table 3 shows the amounts of peroxides used.

**Table 3 - Contents of additized peroxides for samples of examples 1 to 5.**

| O-O (ppm) Active Oxygen | **Samples** | **101 Relative Amount** | **Samples** | **311 Relative Amount** |
|---|---|---|---|---|
| **120** | 1 | 591.0 | 1' | 686.8 |
| **140** | 2 | 689.5 | 2' | 801.3 |
| **160** | 3 | 788.0 | 3' | 915.8 |
| **200** | 4 | 985.1 | 4' | 1144.7 |

The samples were prepared in a twin-screw extruder (Coperion - model ZSK 26) (26 millimeters in diameter and L/D 40) with temperature zones fixed at 160, 180, 200, 215, 230, 230, 230, 230, 230, 230, 230°C, and rotation at 280 rpm. These samples were nominated as First Extrusion or 1^{st} Extrusion. The purpose of these samples was to simulate the industrial processing conditions for producing a CRPP.

After the 1^{st} Extrusion, the samples were re-extruded under new extrusion conditions, raising the temperatures and with heating zones of 180, 200, 220, 240, 260, 280, 290, 290, 290, 290, 290°C. These samples were named 2^{nd} Extrusion. This stage is important for studying the properties in the final process conditions (for instance melt blown, hot melt, injection, among others), where all the active peroxide would be consumed after the 1^{st} Extrusion. It is recommendable to use temperatures over 265°C in the 2^{nd} Extrusion for the total consumption of the low reactivity peroxide, for processing with average residence time of 30s. It is possible to decrease the residence time at higher temperatures or greater residence times for lower temperatures. As industrial processes do not have this flexibility, the values shown here are considered as average.

All the results presented in the following examples were based on these four (4) samples submitted to two process conditions. In some analyses ahead, comparisons were made between these two processes separately: 1^{st} Extrusion (process conditions in petrochemicals) and 2^{nd} Extrusion (processing conditions over 265°C).

### Example 01

To verify the behavior of the resin base, the homopolymer of IF 3.5g/10min, was extruded under the conditions of the 1^{st} Extrusion and again extruded under the conditions of 2^{nd} Extrusion with the purpose of verifying the effect of thermomechanical degradation (without the presence of peroxide). These samples were pressed in the form of disks of 25 mm in diameter and 1.5 mm in thickness and placed in an Anton Paar rheometer, MCR 501, at 200°C.

Accordingly, it can be noted in Figure 2, that the PP degradation was small, resulting in a discrete and irrelevant reduction in the molar mass and MMD.

The values of Eta Zero, MMD and Mw are noted in Table 4. Based on the viscosity curves versus Frequency, it is noted that at low Frequencies the materials tend to display constant viscosities. This region is known as Newtonian plateau and its value is called Eta Zero (Eta0). The values of Molar Mass Distribution (MMD) and Pondered Average Molar Mass (Mw) were obtained by GPC ("Gel Permeation Chromatography"). The GPC analysis is carried out by dissolving samples of polypropylene in 1,2,4-triclorobenzene at 140°C. The samples were analyzed in the Viskotec equipment.

**Table 4 - Values of Eta 0, Molar Mass and MMD for samples of PP without the presence of Active Oxygen.**

| | Eta 0 | Mw (g/mol) | MMD |
|---|---|---|---|
| 1^{st} Extrusion | 9000 | 296.000 | 4.1 |
| 2^{nd} Extrusion | 5500 | 276.000 | 3.8 |

The process resulted in the decrease of molar mass and consequently of the complex viscosity (Eta Zero) of the resins, and narrowing occurs in the molar mass distribution. These results suggest there was consumption of the additives commonly used in PP stabilization (for example, antioxidants), mainly caused by the second extrusion at very high temperatures.

### Example 02

After the first extrusion, samples 1 to 4 and 1' to 4', were pressed in the form of disks having 25 mm in diameter and 1.5 mm in thickness and placed on an Anton Paar rheometer, MCR 501, at 200°C to verify their rheological stability with the temperature. Knowing that the pressing process in itself generates heating, part of the peroxide incorporated and still active should be consumed in this preparation of samples. However, it is considered that this consumption is minimal. If the consumption process thereof is slow enough, then it is proven that the extrusion process - 1^{st} Extrusion generated material with high contents of still active peroxides.

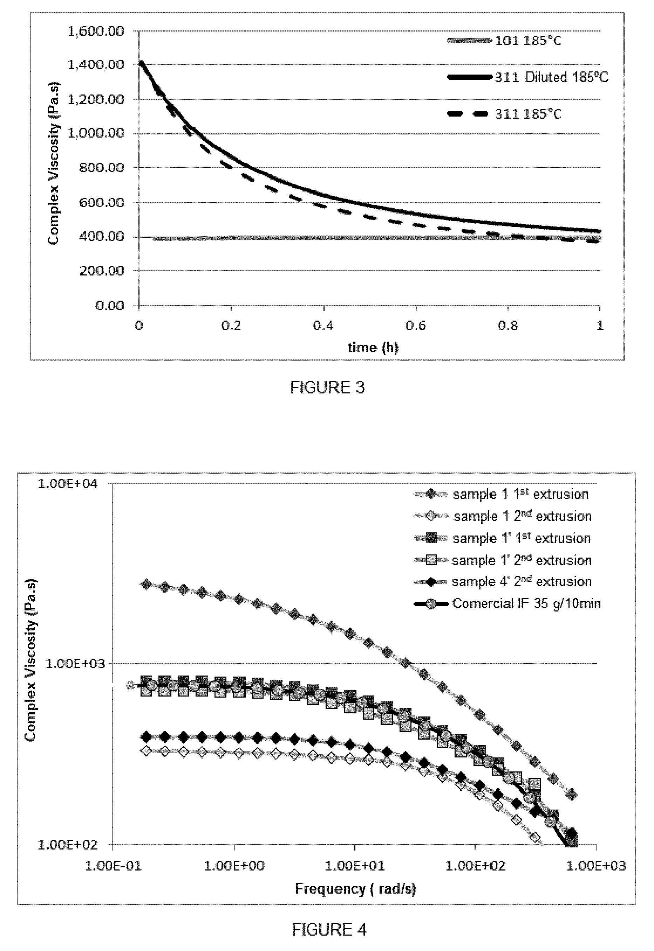

For samples with higher contents of 101 and 311 (samples 4 and 4'), the following result was obtained from verifying the thermal stability of the products with peroxides, shown in Figure 3**Fehler! Verweisquelle konnte nicht gefunden werden..** Additionally, a sample was tested (311 Diluted) in which 311 diluted in mineral oil (30% of peroxide in mineral oil) was used.

Analyzing the complex viscosity curves, although they are still reacting during the 15 minutes of analysis, the results shown in Figure 4 were obtained, where "Commercial IF 35 g/10 min" refers to the pure PP without the addition of peroxides.

It is noted that disregarding the effects relating to the process of preparing the sample, the samples with Trigonox™ 311 maintain a high degree of activity at the temperatures analyzed and display degradation behavior even after 1 hour of monitoring. In contrast, the samples with Trigonox 101 were stable, indicating that all the peroxide was consumed. For a better understanding of the evolution of the PP degradation process, techniques such as GPC were employed. In this case, the analysis does not cause the reaction of the still active peroxide in the samples, enabling a comparison of its state after the 1^{st} Extrusion. The behavior of pure Trigonox 311 and same in mixture with mineral oil at 30%, did not display different trends at 185°C, and in both cases the initial viscosity noted and the kinetics were very close. The Eta0 Mw and MMD data of the samples in the 1^{st} and 2^{nd} Extrusion for the peroxides 311 and 101 are shown in Table 5.

**Table 5 - Values of Eta 0, Mw and MMD for different extrusions with peroxides 101 and 311.**

| | Eta 0 | Mw (g/mol) | MMD |
|---|---|---|---|
| 1 1^{st} extrusion | 2770 | 235,000 | 3.2 |
| 1' 1^{st} extrusion | 800 | 166,000 | 2.7 |
| 1 2^{nd} extrusion | 400 | 150,000 | 2.4 |
| 1' 2^{nd} extrusion | 714 | 163,000 | 2.8 |
| 4' 2^{nd} extrusion | 435 | 140,000 | 2.3 |

In this comparison, it can be noted that the sample with Trigonox™ 101 does not undergo significant alteration in analyses after the 1^{st} Extrusion and the 2^{nd} Extrusion, indicating almost total consumption of the peroxide. In the sample with Trigonox™ 311 a drastic reduction in viscosity occurs from one extrusion to the next to the order of 7 times.

In relation to the viscosities, it is noted that for a same sample, similar viscosity results (1 and 4') after the 2^{nd} extrusion are attained with less than 60% of equivalent oxygen (120 x 200 ppm) using the 311 compared to the 101. This superior performance enables significant steps forward in costs and process control. It is therefore noted that the CRPPs of the present invention are capable of attaining much lower or suitable IFs for a certain application using a lesser amount of peroxides when compared to the use of conventional peroxides, which means lower content of volatile residues.

Another advantage of the CRPP of the present invention is the ease of granulation without the need for adjustments in the extrusion process. It is known that the granulation process is hindered when carried out on ultra low viscosity resins. The CRPP resin of the present invention overcomes this problem, as it presents suitable viscosity for granulation (important for the submersed cutting of the process). The low viscosity will be attinaed only in the processing for final application (2^{nd} Extrusion). This characteristic is particularly advantageous at industrial plants, where the resin is produced, granulated and subsequently transported for application at the client.

By means of the process of the present invention, it is possible to use high amounts of peroxide, since only a part thereof will react, still maintaining the suitable viscosity for the industrial granulation process, and the formation of the final rheological characteristics will occur in a subsequent transformation process.

### Example 3 - Evaluating the addition of peroxides

Samples varying the amount of peroxides are evaluated in this example, as described in Table 6.

**Table 6 - Values of Eta 0, Mw and MMD for various contents of active oxygen of different peroxides and extrusions.**

| Peroxide | Extrusion stage | Sample | Eta 0 | Mw (g/mol) | Mw/Mn |
|---|---|---|---|---|---|
| 311 | 1^{st} | 1 | 2770 | 235,000 | 3.20 |
| | | 2 | 2500 | 227,000 | 3.07 |
| | | 3 | 2460 | 244,000 | 3.05 |
| | | 4 | 1780 | 225,500 | 2.97 |
| | 2^{nd} | 1 | 400 | 150,000 | 2.4 |
| | | 2 | 322 | 132,000 | 2.40 |
| | | 3 | 299 | 134,000 | 2.35 |
| | | 4 | 227 | 121,000 | 2.18 |
| 101 | 1^{st} | 1' | 800 | 166,000 | 2.7 |
| | | 2' | 604 | 154,000 | 2.57 |
| | | 3' | 574 | 150,000 | 2.35 |
| | | 4' | 421 | 140,000 | 2.33 |
| | 2^{nd} | 1' | 714 | 163,000 | 2.8 |
| | | 2' | 598 | 147,500 | 2.71 |
| | | 3' | 521 | 151,000 | 2.60 |
| | | 4' | 435 | 135,000 | 2.45 |

Just as in Example 2, it is noted that all the samples with Trigonox™ 311 present molar mass of over 200.000 g/mol, that is, with IF at around 20g/10min, which is historically easy to granulate in an industrial extruder, without altering the process parameters or reducing the load, due to granulation difficulty. For the peroxide Trigonox™ 101, the values of the 1^{st} and 2^{nd} extrusion are practically identical. Accordingly it is possible to significantly increase the peroxide load in the extruder up to the theoretical limit of potential granulation of 100g/10min, being equivalent to a very high content of peroxide Trigonox 311.

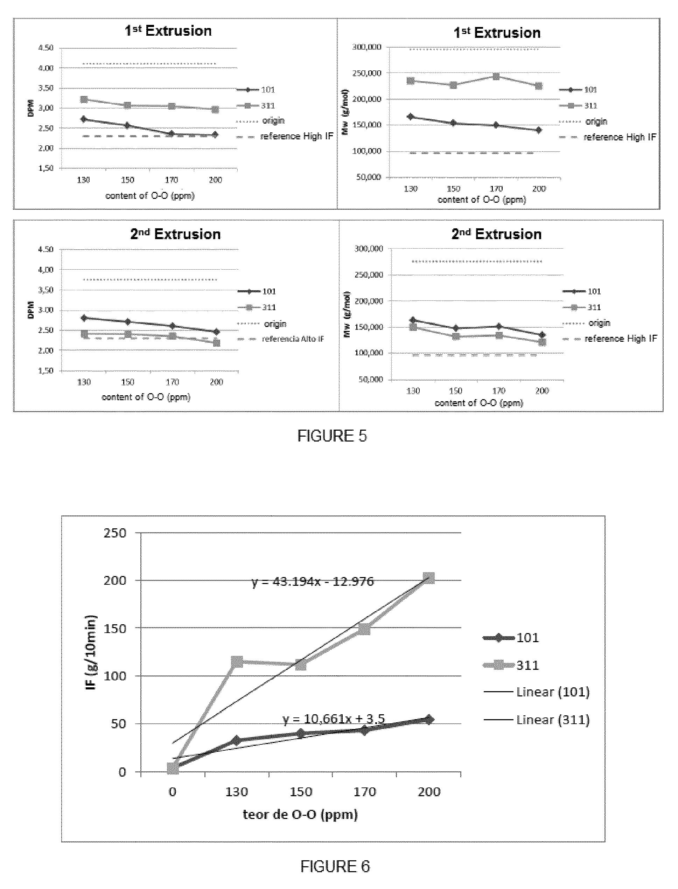

A comparison of the pondered average molar masses and molar mass distributions reveals the following behaviors, shown in Figure 5.

Two references are used as a comparison, one being the homopolymer of IF 3.5 g/10min used in Example 1 and the second a commercial product Polytpropylene H 155 (produced by Braskem), for Melt Blown with IF >1000 g/10min.

It can be noted that the CRPP samples of the present invention (containing Trigonox™ 311) present, in all oxygen concentration ranges, less molar mass and lesser distribution of molar mass after the 2^{nd} Extrusion when compared with the samples using usual CRPP technology. Further, it is noted that the MMDs attained for greater molar masses were of the same order or lower for the higher content of peroxide used. Put otherwise, for a same IF or Eta (0), there is a product of superior behavior due to the narrower molar mass distribution, which is suitable for processes requiring viscocity stability, such as Melt Blown.

The results obtained show that when using less reactive peroxides, the viscosity reduction reaction is preserved for the 2^{nd} Extrusion, and the 1^{st} Extrusion is a stage of homogenization. It is believed that the consumption of less reactive peroxide in the first extrusion does not exceed 20% of the total, maintaining the CRPP with over 80% of the active peroxide. Thus, the CRPP of the present invention is suitable for modification processes via grafting, matching or other reactive extrusion process to occur with greater process control, with the free radical generator already present in the highly homogenized system.

### Example 4

The behavior of the materials after the 2^{nd} Extrusion in terms of IF can be noted in Figure 6.

It can be noted that the IF of the samples of the present invention (containing Trigonox™ 311) displayed a much more intense degradation behavior than that of the samples containing Trigonox™ 101. The dependence of the IF on the dosage is apparently around 4 times higher than the Trigonox™ 101, when applying the method of the present invention (straight-line slants).

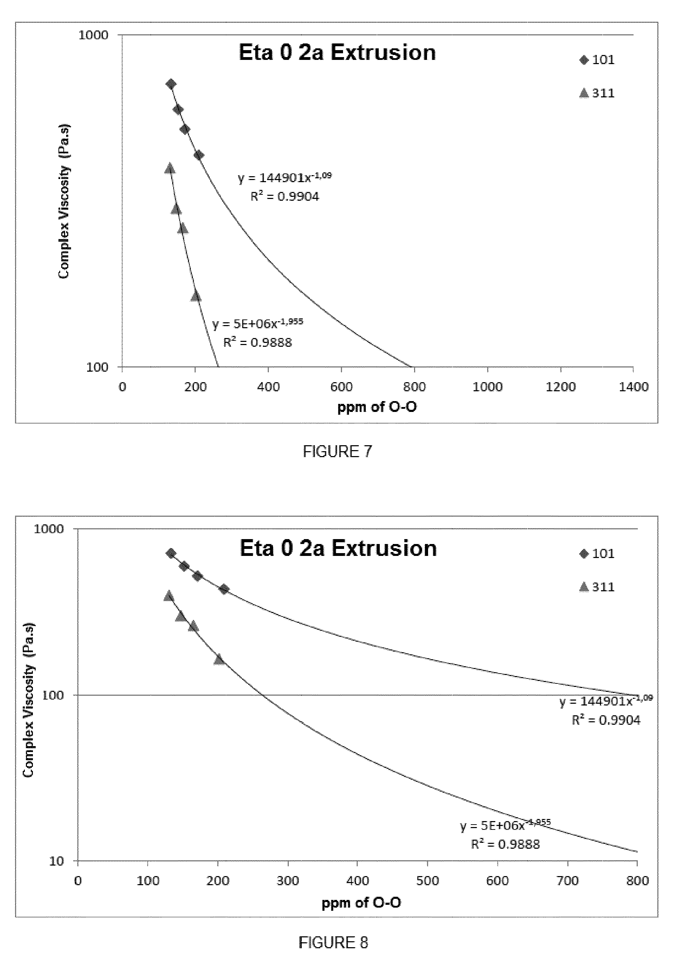

Since IF is an incomplete measure of viscosity, the same comparison can be made with values of Eta 0 to 200°C, comparing the evolution of the viscosity with the content of active oxygen added to the PP, as per Figure 7.

It is noted that for a same desired viscosity of 100 Pa.s, the method of the present invention shows usage of around ¼ of the content of active oxygen. This means lower cost without the need for altering the process conditions.

### Example 5

Preparing an ultra low viscosity PP requires a considerable amount of peroxides that may reach the order of some parts per hundreds. As shown in Figure 8, the method of the present invention permits that with the same content of peroxides as generates resins of 100 Pa.s using Trigonox™ 101, it is possible to generate resins with viscosities almost 10 times lower.

## Claims

1. A method of preparing a controlled rheology polypropylene **characterized by** comprising a stage of mixing a propylene polymer with at least one low-reactivity organic peroxide.

2. The method as claimed in claim 1 characterized wherein the propylene polymer is selected from the group comprising homopolymer PP, random copolymer, heterophasic copolymer, polypropylene blends, polypropylene blends with polyethylenes, polypropylene blends with EPDM, polypropylenes with elastomers, and mixtures thereof.

3. The method as claimed in claim 1 characterized wherein the propylene polymer presents MFI from 0.3 to 200g/10min and/or viscosity Eta 0 between 100.000 Pa.s and 500 Pa.s at 200°C.

4. The method as claimed in claim 1 characterized wherein the low-reactivity organic peroxide presents exponential decay temperature of one hour greater than 140°C, preferably greater than 145°C, more preferably greater than 148°C.

5. The method as claimed in claim 1 characterized wherein the low-reactivity organic peroxide presents exponential decay temperature of ten hours greater than 128°C, preferably greater than 130°C, more preferably greater than 135°C.

6. The method as claimed in claim 1 characterized wherein the low-reactivity organic peroxide is selected from the group comprising di(t-butyl) peroxide, 2,5-dimethyl-2,5-di(t-butylperoxy)-3-hexine; 3,3,5,7,7-Pentamethyl-1,2,4-trioxepane; hydroperoxide of tert-butyl and mixtures thereof.

7. The method as claimed in claim 1 characterized wherein the low-reactivity organic peroxide may be in the form of liquid, powder, diluted in mineral oil, masterbatch, emulsion, solution, peroxide blends, mixtures with silicas or other loads.

8. The method as claimed in claim 1 characterized wherein the low-reactivity organic peroxide is added to the propylene polymer in accordance with its concentration of active oxygen, varying from 50 to 5000 ppm, preferably from 80 to 3000 ppm, more preferably from 100 to 1000 ppm of active oxygen based on the mass of the final composition.

9. The method as claimed in claim 1 characterized wherein the mixture occurs in a single or twin-screw extruder.

10. The method as claimed in claim 1 characterized wherein a granulation stage of the controlled rheology polypropylene optionally occurs after the mixing stage.

11. The method as claimed in claim 1 or 10 characterized wherein the mixing and granulating stages occur at a temperature under 250°C, preferably between 210 and 240°C.

12. The method as claimed in claim 1 characterized wherein the mixing stage occurs for a period under 50s.

13. The method as claimed in claim 1 or 10 characterized wherein after the mixing and/or granulation stage there occurs a heating stage of the controlled rheology polypropylene at temperature varying from 260 to 310°C, preferably from 265°C to 310°C.

14. The method as claimed in claim 13 characterized wherein there is a viscosity reduction in the controlled rheology polypropylene.

15. The method as claimed in claim 14 characterized wherein the controlled rheology polypropylene presents viscosity at least four times lower than that of the propylene polymer, and/or viscosity Eta 0 between 5 and 100 Pa.s at 200°C and/or IF between 400g/10min and 3000g/10min.

16. The controlled rheology polypropylene according to the method of preparing defined in any of claims 1 to 15, **characterized by** comprising at least 70% of active oxygen.

17. The use of the controlled rheology polypropylene as defined in claim 16 **characterized by** being for producing fibers, nonwoven fabric, hot melt adhesives, spun bond, injection-molded articles.

18. An article of manufacture **characterized by** comprising the controlled rheology polypropylene as defined in claim 16.
